Europäisches Patentamt

European Patent Office

Office européen des brevets

(19)

(11) Veröffentlichungsnummer : **0 123 135**
**B1**

(12) **EUROPÄISCHE PATENTSCHRIFT**

(45) Veröffentlichungstag der Patentschrift :
**15.03.89**

(21) Anmeldenummer : **84103068.7**

(22) Anmeldetag : **21.03.84**

(51) Int. Cl.⁴ : **B 60 C 11/06**

(54) **Fahrzeugluftreifen.**

(30) Priorität : **23.04.83 DE 3314775**

(43) Veröffentlichungstag der Anmeldung :
**31.10.84 Patentblatt 84/44**

(45) Bekanntmachung des Hinweises auf die Patenterteilung : **15.03.89 Patentblatt 89/11**

(84) Benannte Vertragsstaaten :
**BE DE FR GB IT NL**

(56) Entgegenhaltungen :
**EP--A-- 0 069 464**
**DE--A-- 2 029 844**
**FR--A-- 2 007 852**
**FR--A-- 2 338 814**
**US--A-- 2 779 378**

(73) Patentinhaber : **Continental Aktiengesellschaft**
**Königsworther Platz 1**
**D-3000 Hannover 1 (DE)**

(72) Erfinder : **Thielemann, Klaus, Dipl.-Ing.**
**Gaussstrasse 2**
**D-3200 Hildesheim (DE)**
Erfinder : **Trabandt, Hagen**
**Mozartstrasse 8**
**D-3163 Sehnde 1 (DE)**

## Beschreibung

Die Erfindung betrifft einen Fahrzeugluftreifen mit zickzackförmigen, im wesentlichen in Reifenumfangsrichtung verlaufenden Nuten im Laufstreifen, gemäß dem Oberbegriff des Anspruchs 1. Derartige Reifen sind z. B. durch die EP-A-0 069 464 bekannt.

Es ist weiterhin bekannt, durch eine besondere Querschnittsgestaltung von Laufstreifennuten das Vermögen, Fremdkörper, insbesondere Steine, festzuhalten, zu mildern. Diese Maßnahmen sind insbesondere für Lastkraftwagen von Bedeutung, weil die hierbei entstehenden Beanspruchungen so groß sind, daß in das Profil eingedrungene Steine oder dergl. zu einer vorzeitigen Zerstörung im Bereich der Reifenzenitpartie führen können. Sehr kritisch sind dabei die Mittelachsen von sogenannten 3-Achs-Aggregaten, z. B. bei Sattelaufliegern ; diese Achsen erfahren nämlich bei Schwenk- und Drehbewegungen des Aggregates praktisch eine Verschwenkung auf der Stelle, wodurch eingedrungene Fremdkörper gewissermaßen in den Laufstreifen hineingetrieben werden können.

Der Erfindung liegt im wesentlichen die Aufgabe zugrunde, bei Reifen der eingangs erwähnten Art dafür Sorge zu tragen, daß Steine oder ähnliche in das Reifenprofil eingedrungene Fremdkörper in den Profilvertiefungen nicht steckenbleiben, sondern bei Verschwenk- bzw. Drehbewegungen der zugehörigen Reifenachse aus dem Profil des Luftreifens herausfallen.

Diese Aufgabe wird erfindungsgemäß durch die Merkmale des Anspruchs 1 gelöst. Vorzugsweise (beträgt der Schräganstieg der Stufenflächen) etwa 15 bis 25°.

Diese Stufung und dieser Verlauf der Stufenflächen hat zur Folge, daß etwa eingeklemmte Fremdkörper keinen nennenswerten Halt finden, sondern unter einem Druck von oben und einer Verdrehung des Reifens bzw. einer Verschwenkung der Reifenachse in einen Bereich der Zickzacknut gelangen, der eine vergleichsweise größere Breite aufweist. In diesem Bereich kann dann der Fremdkörper nicht mehr erfaßt werden. Er fällt also aus dem Reifenprofil heraus.

Weitere Einzelheiten der Erfindung werden anhand der Zeichnung erläutert, in der ein Ausführungsbeispiel dargestellt ist. Es zeigen :

Fig. 1 eine Teildraufsicht auf die Lauffläche eines Luftreifens für Lastkraftfahrzeuge, und zwar auf die Lauffläche des Reifens der Mittelachse eines sogenannten 3-Achs-Aggregates,

Fig. 2 einen Ausschnitt aus Fig. 1,

Fig. 3 und 4 je Ansichten in Richtung der Pfeile III bzw. IV von Fig. 2 gesehen, wobei die Fig. 3 und 4 unmittelbar nebeneinanderliegend dargestellt sind,

Fig. 5 die beiden Darstellungen gemäß Fig. 3 und 4 übereinanderliegend unter Darstellung der sichtbaren Kanten im Reifenprofil wiedergegeben und

Fig. 6 einen Schnitt nach der Linie VI-VI von Fig. 2.

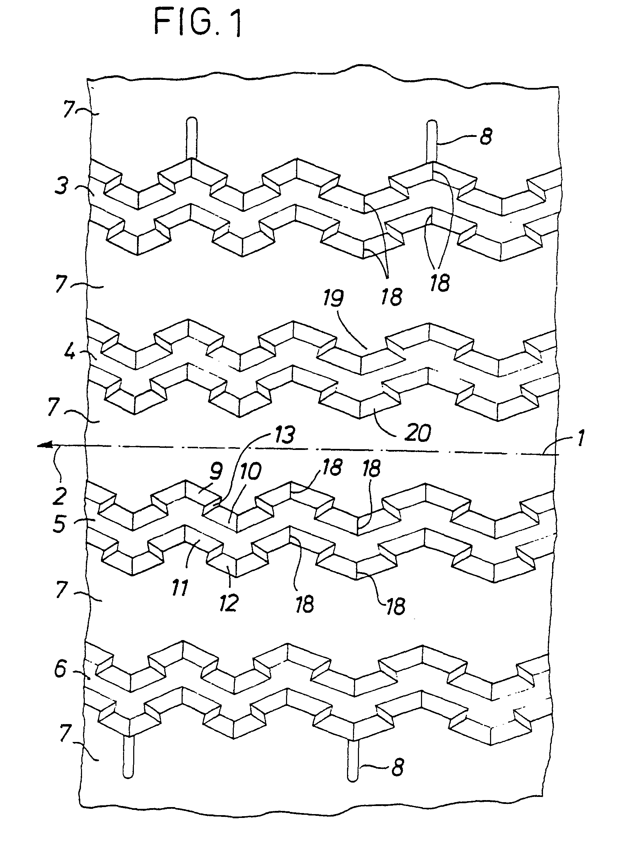

Das Reifenprofil gemäß Fig. 1 mit der Mittellinie 1 und der in Reifenumfangsrichtung aufzeigenden Pfeildarstellung 2 weist im wesentlichen vier zickzackförmig verlaufende Umfangsnuten 3, 4, 5 und 6 auf. Diese Umfangsnuten unterteilen den Laufstreifen in fünf Umfangsbänder 7, von denen die mit den Quereinschnitten 8 versehenen Umfangsbänder 7 die Reifenlauffläche seitlich abschließen.

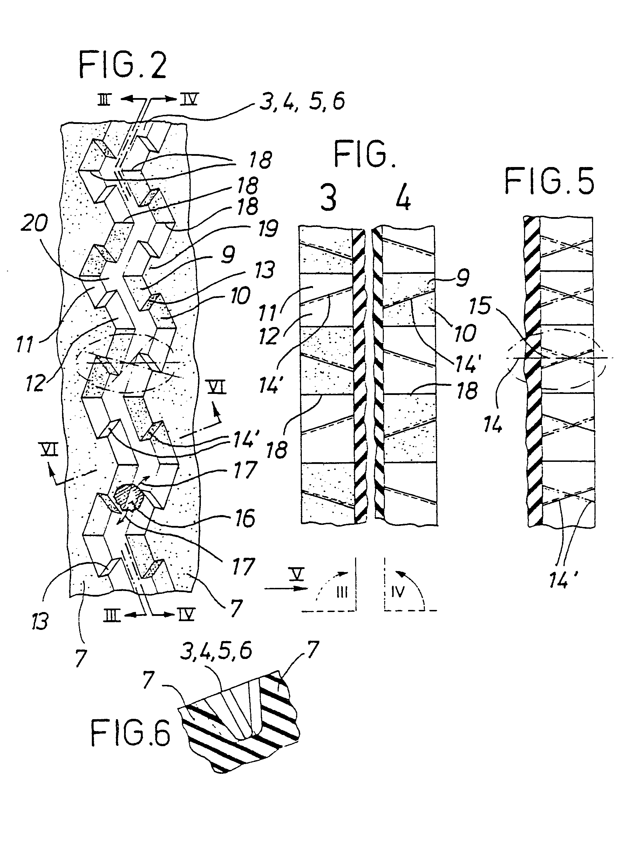

Die Umfangsnuten 3 bis 6 werden im wesentlichen gebildet von das Zickzack bildenden Schenkelflächen 9, 10 auf der einen Seite der Profilvertiefungen und von den Schenkelflächen 11 und 12 auf der anderen Seite der Umfangsnuten. Diese Schenkelflächen 9, 10 bzw. 11, 12 mit einem geringen Schräganstieg gemäß Fig. 6 fluchten jedoch nicht untereinander. Vielmehr ist zwischen diesen beiden Schenkelflächen eine Stufe mit einer Stufenfläche 13 vorgesehen in der Weise, daß die Flächen 9, 10 bzw. 11, 12 um die Breite der Stufenfläche 13 parallel zueinander versetzt sind. Die Stufenflächen 13 erstrecken sich dabei etwa in Querrichtung des Reifens, jedoch stehen sie insgesamt schräg zu einer radial in Bezug auf den Reifen verlaufenden Ebene 14, und zwar unter einem Winkel von etwa 20°. Demgemäß sind die Flächen 9, 10 bzw. 11, 12 in der Ansicht trapezförmig gestaltet.

Betrachtet man die Profilierung in Querrichtung, vergl. dazu Fig. 3, 4 und 5, so ist erkennbar, daß die an der Stufung beteiligten schrägen Kanten 14' einander kreuzen, und zwar unter einander gegenüberliegenden dreieckigen Flächen bei 15.

In Fig. 2 ist ein Fremdkörper, und zwar ein Stein 16 dargestellt, der in eine Umfangsnut eingedrungen ist. Infolge der Stufen zwischen den Schenkelflächen 9, 10 bzw. 11, 12 kann der Stein 16 zwar im Bereich des Dreieckes 15 gehalten werden. Kräfte im Sinne der Pfeile 17 führen jedoch dazu, daß der Stein entweder in die eine Umfangsrichtung oder in die andere Umfangsrichtung gewissermaßen über die zugehörige Stufe geführt und dann in einen Nutenabschnitt größerer Breite gelangen muß, womit dann der Stein 16 das Reifenprofil durch Herausfallen verläßt.

Es sei noch erwähnt, daß sich, wie aus den Fig. 3, 4 und 5 hervorgeht, die einander gegenüberliegenden Kanten 14' kreuzen. Dies ist jedoch nicht unbedingt erforderlich. Es kann gegebenenfalls auch eine solche Gestaltung gewählt werden, daß die Dreieckfläche 15 mit ihrer Spitze in der eigentlichen Lauffläche liegt. Darüber hinaus ist aber das Zickzackprofil so eingerichtet, daß die das Zickzack bestimmenden Kanten 18 gegenüberliegender Nutenseiten praktisch fluchten. Wichtig ist unter diesen Voraussetzungen die erwähnte Stufung mit den querverlaufenden jedoch schräg ansteigenden Stufenflächen 13, die unter den obigen Bedingungen gewissermaßen Vorsprünge 19 auf der einen Seite der Umfangsnut und etwa entsprechend geformte Ausnehmungen 20 auf der anderen Seite der Umfangsnut entstehen lassen.

**Patentansprüche**

1. Fahrzeugluftreifen mit im Laufstreifen befindlichen zickzackförmigen Umfangsnuten (3 bis 6), deren Schenkelflächen (9, 10) gestuft und die etwa quer zur Reifenumfangsrichtung verlaufenden Stufenflächen (13) schräg zu einer durch die Hauptachse des Reifens verlaufenden Radialebene (14) angeordnet sind, dadurch gekennzeichnet, daß die durch jeweils eine der Stufenflächen (13) miteinander verbundenen Schenkelflächen (9, 10) parallel zueinander verlaufen, jedoch um die Breite der Stufenfläche (13) gegeneinander versetzt sind und daß die in den Umfangsnuten (3 bis 6) sich jeweils quer zur Reifenumfangsrichtung gegenüberliegenden Stufenflächen (13) entgegengesetzt schräg in bezug auf die Radialebene (14) des Luftreifens verlaufen.

2. Fahrzeugluftreifen nach Anspruch 1, dadurch gekennzeichnet, daß der Schräganstieg der Stufenflächen (13) etwa 15 bis 25° beträgt.

3. Fahrzeugluftreifen nach Anspruch 2, dadurch gekennzeichnet, daß der Schräganstieg etwa 20° beträgt.

4. Fahrzeugluftreifen nach Anspruch 1, dadurch gekennzeichnet, daß die in den Umfangsnuten (3 bis 6) sich gegenüberliegenden Stufenflächen (13), quer zur Reifenumfangsrichtung gesehen, einander kreuzen.

5. Fahrzeugluftreifen nach Anspruch 1, dadurch gekennzeichnet, daß bei den quer zur Reifenumfangsrichtung fluchtenden Knickstellen (18) des Zickzackprofils durch die Stufung der Schenkelflächen (9, 10) auf der einen Seite der Nut Vorsprünge (19) und auf der gegenüberliegenden Seite der Nut Ausnehmungen (20) vorgesehen sind, die im wesentlichen einander entsprechen, jedoch sich bezüglich des Anstiegs der Stufenfläche (13) voneinander unterscheiden.

**Claims**

1. Pneumatic vehicle tyre having zig-zag-shaped circumferential grooves (3 to 6), which are situated in the tread strip and are provided with flange faces (9, 10) which are stepped, and the step faces (13), which extend substantially at right angles to the circumferential direction of the tyre, are disposed inclinedly relative to a radial plane (14), which extends through the main axis of the tyre, characterised in that the flange faces (9, 10) which are each interconnected by means of one of the step faces (13), extend parallel to one another, but are staggered relative to one another by an amount corresponding to the width of the step face (13), and in that the step faces (13), which each lie opposite one another in the circumferential grooves (3 to 6) at right angles to the circumferential direction of the tyre, extend inclinedly in opposite directions with respect to the radial plane (14) of the pneumatic tyre.

2. Pneumatic vehicle tyre according to Claim 1, characterised in that the upward slope of the step faces (13) is substantially 15 to 25°.

3. Pneumatic vehicle tyre according to Claim 2, characterised in that the upward slope is substantially 20°.

4. Pneumatic vehicle tyre according to Claim 1, characterised in that the step faces (13), which lie opposite one another in the circumferential grooves (3 to 6), intersect one another when viewed at right angles to the circumferential direction of the tyre.

5. Pneumatic vehicle tyre according to Claim 1, characterised in that, due to the stepped configuration of the flange faces (9, 10), at the angular portions (18) of the zig-zag profile which are aligned at right angles to the circumferential direction of the tyre, projections (19) are provided on one side of the groove and recesses (20) are provided on the opposite side of the groove, such members (19, 20) substantially corresponding to one another but differing from one another with respect to the incline of the step face (13).

**Revendications**

1. Pneumatique pour véhicule comportant des gorges périphériques en forme de zig-zag (3 à 6), qui sont situées dans la bande de roulement et dont les surfaces (9,10) des flancs sont étagées, les surfaces de décrochement (13), qui s'étendent approximativement transversalement par rapport à la direction circonférentielle du pneumatique, étant disposées obliquement par rapport à un plan radial (14) passant par l'axe principal du pneumatique, caractérisé en ce que les surfaces (9,10) des flancs, qui sont reliées entre elles par des surfaces respectives de décrochement (13), sont parallèles entre elles tout en étant cependant décalées l'une par rapport à l'autre d'une distance égale à la largeur de la surface de décrochement (13) et que les surfaces de décrochement (13) situées respectivement en vis-à-vis transversalement par rapport à la direction circonférentielle du pneumatique dans les gorges circonférentielles (3 à 6) sont disposées obliquement, dans des sens opposés, par rapport au plan radial (14) du pneumatique.

2. Pneumatique pour véhicule selon la revendication 1, caractérisé en ce que l'inclinaison des surfaces de décrochement (13) est comprise entre environ 15 et 25°.

3. Pneumatique pour véhicule selon la revendication 2, caractérisé en ce que l'inclinaison est égale à environ 20°.

4. Pneumatique pour véhicule selon la revendication 1, caractérisé en ce que les surfaces de décrochement (13) situées en vis-à-vis dans les gorges circonférentielles (3 à 6) se croisent lorsqu'on regarde dans la direction circonférentielle du pneumatique.

5. Pneumatique pour véhicule selon la revendication 1, caractérisé en ce que, au niveau des coudes (18), qui sont alignés transversalement par rapport à la direction circonférentielle du pneumatique, du profil en zig-zag formé par l'étagement des surfaces (9,10) des flancs il est prévu, d'un côté de la gorge, des parties saillantes (19) et, sur le côté opposé de la gorge, des évidements (20), les parties saillantes et les évidements se correspondant sensiblement mais en différant les uns des autres du point de vue de l'inclinaison des surfaces de décrochement (13).

# FIG.1

FIG.2

III ← → IV          3, 4, 5, 6

18

18

18

19

20                  9

                     13

11                   10

12

                     14'

VI

VI                   17

                     16

                     17

13                   7

III ← → IV

7

FIG. 3 4          FIG.5

9                 15

11
12                10
                  14'
14'
                  18    14

18

V                 III        IV

FIG.6     3,4,5,6    7
      7
   7

                                14'